# EUROPEAN PATENT SPECIFICATION

(11) **EP 0 720 328 B1**
(45) Date of publication and mention of the grant of the patent: **03.12.2003**
(21) Application number: 95925129.9
(22) Date of filing: 14.07.1995
(51) Int. Cl.: H04L 9/28

(54) **SIGNAL TRANSMITTING METHOD AND COMMUNICATION SYSTEM**
SIGNALSENDEVERFAHREN UND KOMMUNIKATIONSSYSTEM
PROCEDE D'EMISSION DE SIGNAUX ET SYSTEME DE COMMUNICATION

(30) Priority: 15.07.1994 JP 16410394
(43) Date of publication of application: 03.07.1996
(73) Proprietor: NTT MOBILE COMMUNICATIONS NETWORK INC., Minato-ku, Tokyo 105-8436 (JP)
(72) Inventor: MAEBARA, Akihiro, Yokohama-shi Kanagawa 235 (JP); KOBAYASHI, Katsumi, Yokohama-shi Kanagawa 233 (JP); OKAJIMA, Ichiro, Yokohama-shi Kanagawa 235 (JP); UCHIDA, Noriko, Yokohama-shi Kanagawa 231 (JP); UEBAYASHI, Shinji, Yokohama-shi Kanagawa 231 (JP)
(74) Representative: Winter, Brandl, Fürniss, Hübner, Röss, Kaiser, Polte Partnerschaft
(86) International application number: PCT/JP95/01410
(87) International publication number: WO 96/002992

(56) References cited:
- EP-A- 0 173 647
- DE-A- 2 333 975
- JP-A- 1 194 627
- JP-A- 1 212 039
- JP-A- 1 284 037
- JP-A- 4 101 529
- JP-A- 63 248 240
- MAURER U M ET AL: "Cascade ciphers: the importance of being first" JOURNAL OF CRYPTOLOGY, 1993, USA, vol. 6, no. 1, pages 55-61, XP002108137 ISSN 0933-2790
- LAI X ET AL: "A proposal for a new block encryption standard" ADVANCES IN CRYPTOLOGY - EUROCRYPT '90. WORKSHOP ON THE THEORY AND APPLICATION OF CRYPTOGRAPHIC TECHNIQUES PROCEEDINGS, AARHUS, DENMARK, 21-24 MAY 1990, pages 389-404, XP000617517 ISBN 3-540-53587-X, 1991, Berlin, Germany, Springer-Verlag, Germany
- AKIHIRO SHIMIZU ET AL: "FEAL - FAST DATA ENCIPHERMENT ALGORITHM" SYSTEMS & COMPUTERS IN JAPAN, vol. 19, no. 7, 1 July 1988, pages 20-33, 104 - 106, XP000070990

## Description

### Technical Field

This invention relates to a signal transmitting method and a communication system suited to be used for a case in which a plurality of mobile stations can access to a common access channel, for example.

### Background Art

In case of a digital signal transmission in which a plurality of terminals can access to a common channel, it is necessary that identification data for identifying a transmitter's terminal and its communication counterpart are indicated. The reason is as follows. If it is unknown that a certain signal is to be transmitted from what terminal to what terminal, the signal itself becomes impossible to be transmitted because the common channel can be accessed by any terminals. The same is true to a case in which a packet communication is performed in a mobile telephone.

Incidentally, under the above-mentioned circumstance, it is customarily made open that a certain signal is to be transmitted from which terminal to which terminal. Therefore, an identification data indicative of the counterpart's terminal (or mobile station) can easily be intercepted or monitored. For this reason, an ill-willed interference can easily be performed when so desired. For example, it will be easily performed that some kind of signal is sent to the counterpart for the purpose of interference.

As a prevention measure, it can be contemplated that a signal is made secret or concealed. For the sake of convenience in the communication system, however, it is practically impossible to make secret or conceal data of the counterpart and therefore, it is only data of the transmitting signal that can be made secret.

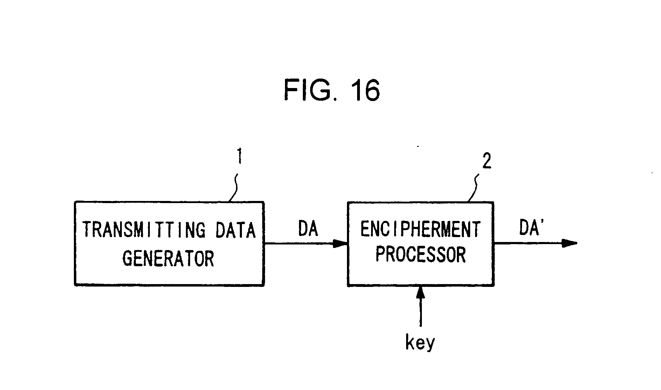

Here, one example of a construction for enciphering a signal is depicted in Fig. 16. In Fig. 16, reference numeral 1 denotes transmitting data generator for generating data to be transmitted. Data DA prepared in the transmitting data generator 1 is enciphered by an encipherment processor 2 in accordance with a given algorithm. For encipherment, a key Key is used. For breaking the enciphered signal, the receiver side may use the same key to the one which the transmitter side uses.
In that case, since the transmitter side and the receiver side are asynchronous, the receiver side cannot appropriately change the key Key but is required to use a predetermined fixed key.

In the exemplified construction in Fig. 16, the signal can be made secret if so desired. However, in case the data are simple, the original data can, in some cases, be guessed simply by seeing the enciphered result. Therefore, it cannot be said that the exemplified construction has a sufficient concealability in view of prevention of interference.

In case of control signals for mobile communication, for example, data are limited and the kind of data are also small, so small as only three in some cases. On the other hand, if the signal is enciphered using a fixed key in accordance with the same algorithm, the original signal can easily be made apparent because the kind of the enciphered signal becomes the same in number as the original signal. That is, with the method for enciphering a signal using the same key, when the kind of patterns of the signal is small, the pattern of the enciphered result becomes also small. Thus, the original signal can easily be guessed.

For the reasons mentioned above, when a signal should be monitored by an ill-willed third party who has a good knowledge of the system, there would be a large possibility that the transmitted or received signal is guessed as to what signal it is, based on data obtained from the monitored result, such as frequency of an occurrence of a certain pattern, signal length, etc., which are the results of encipherment. Especially, when the signal in question is a control signal, it can be guessed as to for what purpose the control signal is used (for example, connection, disconnection, and the like) .

Once it is known for the third party that a signal is transmitted for such and such purposes, the third party can generate the same signal to the one which the genuine terminal generates, without knowing the key for concealment. As a consequence, it becomes possible for the third party to interfere the communication pretending to be the genuine terminal.

In case, for example, of a packet communication using a mobile telephone in which the kind of control signals is small, a simple encipherment is not good enough as a preventive measure of a possible interference in view of the reasons mentioned above. In addition, since a signal is transmitted in a communication circumstance easy to be monitored, an effective preventive measure against a possible interference is demanded.

Further information regarding the prior art can be found in Maurer, U.M., et al.: "Cascade Ciphers: The Importance of being First" Journal of Cryptology, 1993, USA, vol. 6, no. 1, pages 55-61, XP002108137, ISSN 0933-2790, which discusses the security of cascade ciphers, in which, by definition, the keys of the component ciphers are independent. In particular, cascade ciphers are discussed that include an additive stream cipher in which a key-dependent "keystream" sequence is added bit-by-bit modulo 2 to the plaintext sequence.

Further prior art can be found in DE 2333975 A, which discloses a signal transmitting method comprising the steps of generating first transmission data by inserting first random pulses into predetermined positions of the first original data, generating a first transmission signal by enciphering said first transmission data using a predetermined key, and transmitting said first transmission signal. The signals may be digital.

### Disclosure of Invention

The present invention has been developed in view of the above-mentioned situation. It is, therefore, an object of the present invention to provide a signal transmitting method and a communication system, in which a communication can fully be prevented from being interfered by a third party, by providing means of properly making secret of or concealing a transmitting signal itself even in the case where data indicative of a counterpart's terminal are obliged to be made open because of use of a common access channel.

In accordance with the present invention, this object is achieved by the signal transmitting method of independent claim 1, the complementary signal receiving method of independent claim 6 and the corresponding communication method of independent claim 11 as well as the signal transmitting device of independent claim 16, the signal receiving device of independent claim 21 and the communication system of independent claim 26, each relating to a corresponding device/system. Preferred embodiments of the invention are specified in the dependent claims.

The invention according to a first embodiment is characterized in that the transmitter side adds a random-number bit to a predetermined position of a signal to be transmitted, enciphers the signal using a predetermined key, and then transmits the enciphered signal, and in that the receiver side breaks the encipherment of a received signal using the predetermined key and then removes the random-number bit from a predetermined position of the signal.

The invention according to a modification of the first embodiment is characterized in that the transmitter side adds a random-number bit and an identification data for identifying a local station on the transmitter side to a predetermined position of a signal to be transmitted, enciphers the signal using a predetermined key, and then transmits the enciphered signal, and in that the receiver side breaks the encipherment of a signal received using the predetermined key, removes the random-number bit from a predetermined position of the signal whose encipherment has been broken, judges whether or not the identification data is in agreement with an identification data of a device on the transmitter side, and judges that the signal has been received in a normal condition when the first judgment result is affirmative.

The invention according to the first embodiment can also be characterized in that a transmitting device comprises random-number generating means for generating a random-number of a predetermined bit, transmitting signal generating means for outputting a signal to be transmitted, random-number adding means for adding the random-number bit, which has been generated by the random-number generating means, to a predetermined position of the signal output by the transmitting signal generating means, and then outputting the signal, and enciphering means for enciphering an output signal of the random-number adding means, using a predetermined key, and in that a receiving device comprises encipherment-breaking means for breaking the encipherment of a received signal using the predetermined key, and random-number bit removing means for removing the random-number bit from a predetermined position of the signal output by the encipherment-breaking means and then outputting the same.

The invention according to the aforementioned modification of the first embodiment can also be characterized in that a transmitting device comprises random-number generating means for generating a random-number of a predetermined bit, transmitting signal generating means for outputting a signal to be transmitted, bit adding means for adding a random-number bit generated by the random-number generating means, and an identification data bit for identifying the transmitting device to a predetermined position of the signal output by the transmitting signal generating means, and then outputting the same, and enciphering means for enciphering the output signal of the bit adding means, using a predetermined key, and in that a receiving device comprises encipherment-breaking means for breaking the encipherment of a received signal using the predetermined key, random-number bit removing means for removing the random-number bit from a predetermined position of the output signal of the encipherment-breaking means, and
judging means for judging whether or not the identification data included in the output signal of the encipherment-breaking means is in agreement with the identification data of the transmitting device, and judging that the received signal is effective when the first judgment result is affirmative.

The invention according to a second embodiment is characterized in that the transmitter side generates a random-number position data indicative of a position for adding a random-number bit and adds a random-number to a bit position corresponding to the random-number position data, and in that the receiver side generates a random-number position data having the same value as the transmitter side in the same sequential order as the transmitter side, and removes the random-number from a bit position corresponding to the generated random-number position data when the random-number bit is removed.

The invention according to the second embodiment can also be characterized in that the transmitting device comprises first random-number position data generating means for generating a random-number position data indicative of a position to which a random-number bit is to be added, the random-number adding means adding the random-number to a position corresponding to the random-number position data generated by the first random-number position data generating means, and in that the receiving device comprises second random-number position data generating means for generating a position data having the same value as the position data generated by the first random-number position data generating means in the same sequential order, the random-number bit removing means removing a random-number from a bit position corresponding to the random-number position data generated by the second random-number position data generating means.

The invention according to a modification of a third embodiment is characterized in that the transmitter side generates a random-number position data indicative of a position to which a random-number bit is to be added, adds a random-number to a bit position corresponding to the random-number position data, and adds the random-number position data to the transmitting signal, and in that the receiver side extracts a random-number position data from a received signal, and removes a random-number from a bit position corresponding to the random-number position data thus extracted when the random-number is to be removed.

The invention according to said modification of a third embodiment can also be characterized in that the transmitting device comprises random-number position data generating means for generating a random-number position data indicative of a position to which a random-number bit is to be added, and random-number position signal adding means for adding the random-number position data to the transmitting signal, the random-number adding means for adding the random-number to a position corresponding to a random-number position data generated by the random-number position data generating means, and in that the receiving device comprises random-number position data extracting means for extracting a random-number position data from the received signal, the random-number bit removing means removing a random-number from a bit position corresponding to a random-number position data extracted by the random-number position data extracting means.

The invention according to said third embodiment is characterized in that said the transmitter side adds a random-number position data of a signal to be transmitted next to a signal to be transmitted immediately before, and in that the receiver side removes a random-number from a signal to be received next, based on a random-number position data extracted from a signal received immediately before.

The invention according to the third embodiment can also be characterized in that the random-number adding means of the transmitting device adds a random-number position data of a signal to be transmitted next to a signal to be transmitted immediately before, and in that the random-number bit removing means of the receiving device removes a random-number from a signal to be received next, based on a random-number position data extracted, by the random-number position data extracting means, from a signal received immediately before.

### (Operation)

Since the inventions according to the first embodiment are constructed as mentioned above, random-number bits are added to predetermined positions of a signal to be transmitted and enciphered using a predetermined key. Accordingly, the original signal cannot be restored merely by breaking the enciphered signal. On the other hand, removal of the random-number bits from predetermined positions of an encipherment-broken signal makes it possible to restore the original signal. In that case, since the signal is enciphered by being applied or added with a random-number, there can be obtained plural results of encipherment with respect to a single signal. Accordingly, the above-mentioned inconvenience can be obviated. That is, while it is very difficult for the third party to make an interference, it is easy for both the transmitter side and receiver side to make secret or conceal the data. In this case, although an address to be added to the transmitting signal is not made secret or concealed, any interference can be prevented because the third party cannot restore the enciphered signal portion to the original state even when the transmitting signal is successfully monitored by the third party.

Since the inventions according to said modification of the first embodiment are constructed as mentioned above, the transmitter side enciphers a signal to be transmitted, together with identification data combined thereto and the receiver side restores it, so that a judgment can be made as to whether identification data in the received signal is in accord with the identification data of the transmitting device. Based on the judgment result, it can be determined whether or not the received signal is a genuine one. For example, since the concealing key has a fixed length, patterns applicable to the key are limited (as one example, in case the concealing key has eight (8) bytes, the patterns applicable to the key are 2⁶⁴). Thus, there is a possibility that a terminal or terminals exist in which a communication is performed using the same key in the same time zone. Therefore, by applying identification data for identifying a certain terminal from others, it can be prevented that a signal from a terminal, which uses the same key, is received by mistake.

Since the inventions according to the second embodiment are constructed as mentioned above, the position where a random-number is applied can be shifted at random. Further, the receiver side can favorably restore the signal by having the same random-number adding position data as the transmitter side. Furthermore, by shifting the position of the random-number, the pattern, which occurs when the signal is enciphered, can be varied. Accordingly, a large number of patterns can be generated with small kinds of random-numbers. As a consequence, the number of patterns to be generated can extensively be increased even if the number of the random-number bits are the same as the inventions according to the first embodiment. This makes it very difficult for the third party to guess the content of a signal. In contrast, when the number of patterns to be generated is arranged to be the same as the inventions according to the first embodiment, the number of the random-number bit can be small. Thus, the same effect can be obtained with small data amount.

Since the inventions according to the modification of the third embodiment are constructed as mentioned above, the position of a random-number can be known based on the random-number position data contained in the received signal. On the other hand, in the inventions according to the second embodiment, the random-number adding position data are preliminarily fixedly had by both the transmitter side and receiver side and the random-number position cannot be known from the received signal. Accordingly, there is the risk that following signal cannot be received, if disagreement may occur in random-number adding position between the transmitter side and the receiver side when the signal is annihilated or the like. In contrast, in the inventions according to the modification of the third embodiment, by virtue of the arrangement in which the transmitting signal contains a random-number adding position data, even if a signal is annihilated, the following signal can be received in a normal condition.

Since the inventions according to the third embodiment are constructed as mentioned above, the transmitter side adds random-number position data corresponding to the next signal to the preceding signal and transmits the same, whereas the receiver side removes the random-number from a newly received signal using the random-number position data added to the preceding signal. In this way, by virtue of the arrangement in which a transmitting signal contains a random-number adding position data, there can be obtained the same effects as the inventions according to the modification of the third embodiment.

### Brief Description of Drawings

Fig. 1 is a block diagram showing a construction of a transmitting device according to a first embodiment of the present invention.
Fig. 2 is a block diagram showing a construction of a receiving device according to the first embodiment.
Fig. 3 is a representation showing a construction of a data of an output signal in a random-number bit adder 6.
Fig. 4 is a representation showing a construction of a data of the output signal in the random-number bit adder 6.
Fig. 5 is a representation showing another construction of a data of the output signal in the random-number bit adder 6.
Fig. 6 is a block diagram showing the other construction of a transmitting device according to a modification of the first embodiment of the present invention.
Fig. 7 is a block diagram showing a construction of a receiving device according to the modification of the first embodiment.
Fig. 8 is a representation showing a construction of a data of an output signal in a bit adder 9.
Fig. 9 is a block diagram showing a construction of a transmitting device according to a second embodiment of the present invention.
Fig. 10 is a block diagram showing a construction of a receiving device according to the second embodiment.
Fig. 11A is a representation for explaining the functions of random-number position data RP.
Fig. 11B is a representation for explaining the functions of random-number position data RP.
Fig. 11C is a representation for explaining the functions of random-number position data RP.
Fig. 12 is a block diagram showing a construction example of a transmitting device according to a third embodiment of the present invention.
Fig. 13 is a block diagram showing a construction example of a receiving device according to the third embodiment.
Fig. 14 is a block diagram showing a construction of a random-number bit adder.
Fig. 15 is a block diagram showing a construction of a random-number bit remover.
Fig. 16 is a block diagram showing a general construction example in which transmitting data is enciphered.

### Best Mode for Carrying Out the Invention

### A-1: Construction of First Embodiment

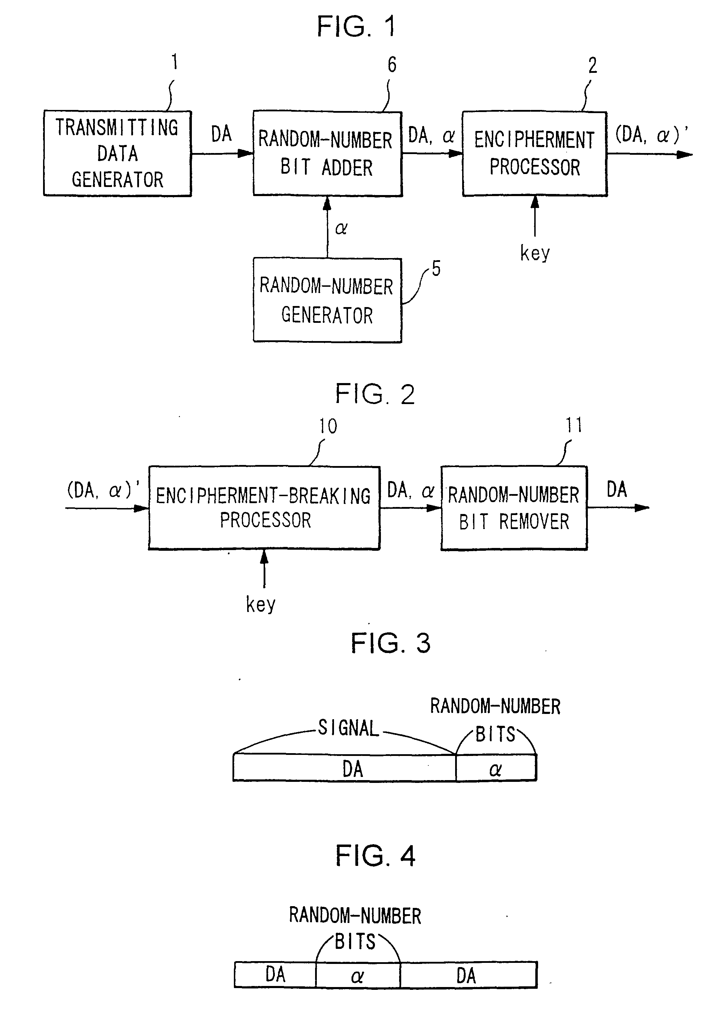

A transmitting device in the first embodiment according to the present invention will be described with reference to Fig. 1. Reference numeral 1 shown in this illustration denotes a transmitting data generator for generating a signal to be transmitted, and reference numeral 2 denotes an encipherment processor for making an encipherment, these being the same to those shown in Fig. 16. Reference numeral 5 denotes a random-number generator for generating a random-number. A random-number α (digital signal) thus generated is added to a signal DA in a random-number bit adder 6. In this case, the random-number α is generated in a preliminarily determined bit number.

In the random-number bit adder 6, as shown in Fig. 3, bits of the random-number α are added to the signal DA and output as a signal (DA, α). Then, in the encipherment processor 2, the signal (DA, α) is enciphered and output as a signal (DA, α)'.

Fig. 2 is a block diagram showing a construction of a receiving device of this embodiment. In this illustration, reference numeral 10 denotes an encipherment-breaking processor for breaking the encipherment of the signal (DA, α)' sent thereto, using a predetermined key Key. The encipherment-breaking processor 10 outputs a signal (DA, α) as a result of encipherment. Then, a random-number bit remover 11 removes the random-number bits α from the signal (DA, α) and transmit it in the form of a signal DA alone to a circuit of a later stage.

### A-2 : Operation of First Embodiment

According to the above-mentioned construction, a signal output by the transmitting device is a signal obtained by enciphering the signal DA added with the random-number α . Accordingly, even in the case where the kind of the signal DA is small, the kind of the signal output by the transmitting device is remarkably increased in accordance with the bit number of the random-number.

In this case, since the enciphered signal is changed in various ways in accordance with the random-number α without any change in algorithm for encipherment and in its key Key, the signal DA cannot be guessed from (DA, α)'. Thus, concealability of signal is greatly enhanced.

On the other hand, in the receiving device, the signal (DA, α)' is encipherment-broken in the encipherment-breaking processor 10 using the fixed key Key and then, the random-number bits are removed in the random-number bit remover 11. By doing this, the signal DA can easily be reproduced.

In the above-mentioned procedure, if the algorithm for encipherment, key Key, bit number of the random-number α , and insert positions of the random-number bits are preliminarily decided between the transmitting device and the receiving device, the signal DA generated by the transmitting device can assuredly be reproduced in the receiving device.

It should be noted that although the bits of the random-number α are added to positions after the signal DA in the example shown in Fig. 3, the adding positions of the random-number are not limited to this. The random-number adding position may be a starting part of the signal DA, or it may be inserted into an intermediate part of the signal DA as shown in Fig. 4. What is essential here is that as long as the bit positions are known, the signal DA can easily be reproduced on the receiving device side.

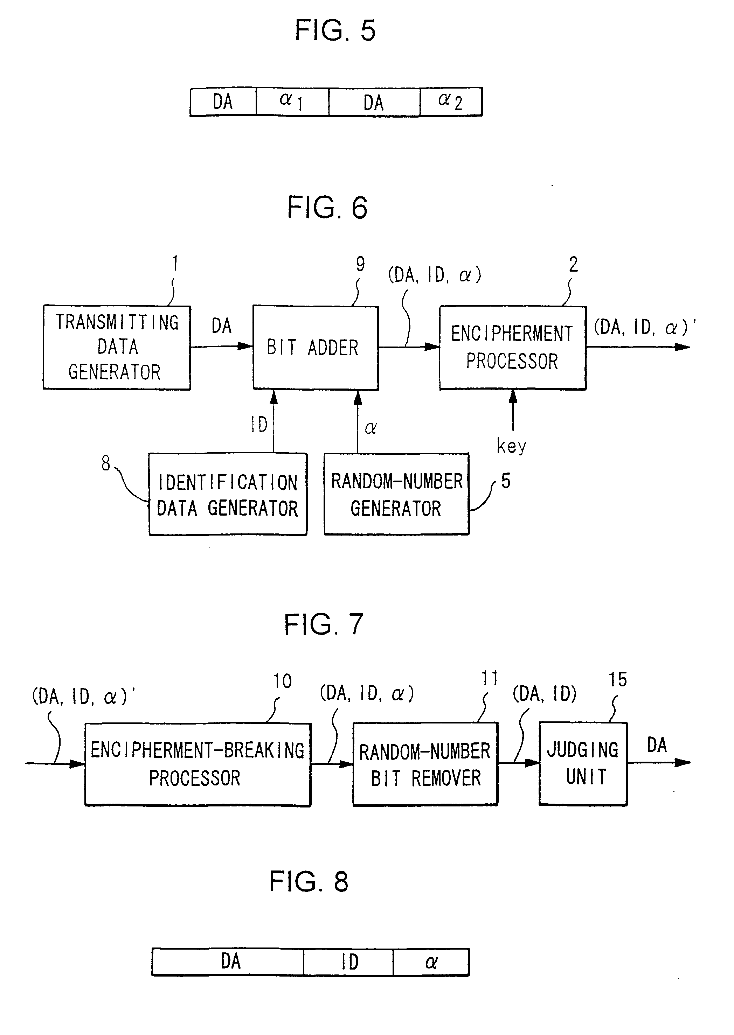

Furthermore, the random-number bits may be divided into α1 and α2 and then added to the signal DA as shown in Fig. 5.

### A-3: Modification of First Embodiment

Next, a modification of the above-mentioned embodiment will be described with reference to Figs. 6 to 8. In this modification, first, as shown in Fig. 6, identification data ID for identifying the specific device are generated in the identification data generator 8 and the identification data ID and random-number α are added to the signal DA in the bit adder 9 (see Fig. 8). As a consequence, the signal output from the encipherment processor 2 becomes (DA, ID, α).

In the receiving device, a judging unit 15 makes a following judgment with respect to the signal (DA, ID) output from the random-number bit remover 11. The judging unit 15 reads the identification data ID contained in the signal (DA, ID) and judges whether or not the identification data ID thus read are in agreement with the identification data of the transmitting device. The ID of the transmitting device is preliminarily recognized by means of a prior communication, or is preliminarily registered through a setting operation with respect to a device to be subjected to communication.

When an agreement of the identification data is detected in the judging unit 15, a judgment is made to the effect that a normal receiving is performed and the signal DA contained in the received signal is transmitted, as regular data, to a later stage. On the other hand, when an agreement of the identification data is not detected in the judging unit 15, the specific received-signal is invalidated.

In this modification, the signal is concealed using a randam number and in addition, agreement of identification data between the transmitter side and the receiver side is judged. Thus, this modification is extremely effective against interference.

In case a packet communication is performed in the above modification, the identification data ID contained in the enciphered signal may be compared with data for identifying a device, which data are usually included in a part of the header of the packet. In this case, the unconcealed identification data included in the header can easily be monitored from outside. However, the identification data ID contained in the enciphered signal are not known. Accordingly, any interference attempt to transmit a signal resembling the header portion would be unsuccessful because the received signal is invalidated in the judging unit 15.

### B: Second Embodiment

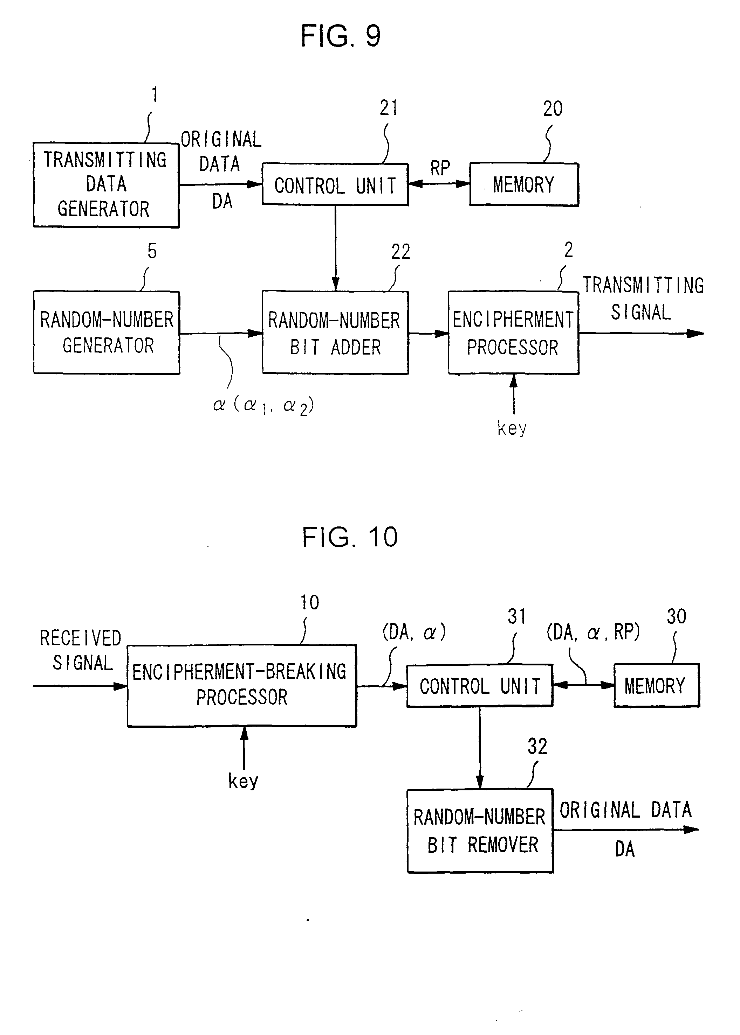

A second embodiment of the present invention will now be described with reference to Figs. 9 and 10. Fig. 9 depicts a construction of the transmitter side, whereas Fig. 10 depicts a construction of the receiver side. In the illustrations, like parts of the first embodiment are denoted by like reference numerals.

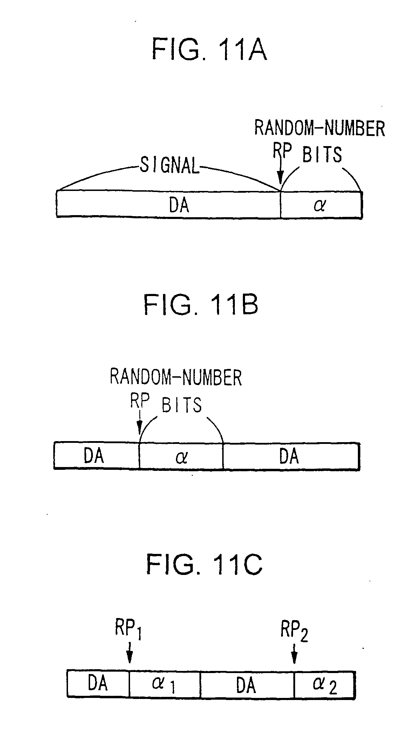

Reference numeral 20 of Fig. 9 denotes a memory in which a plurality of random-number position data RP indicative of random-number bits insert positions are stored. In this case, the random-number α is inserted, as shown in Figs. 11A and 11B, in the bit positions indicated by the random-number position data RP. In case the random-number is divided into α1 and α2 as in the above-mentioned modification, corresponding random-number position data are prepared (see random-number position data RP1, RP2 of Fig. 11C).

A control unit 21 of Fig. 9 adds random-number position data RP, which are read from a memory 20, to a signal DA (original data) which is output by a transmitting data generator 1 and transmits the same to a random-number bit adder 22. The random-number bit adder 22 inserts a random-number α to the signal DA in the bit position indicated by the random-number position data RP. The random-number α-added signal (DA, α) is enciphered by an encipherment processor 2 and then output as a signal (DA, α)'.

In a memory 30 shown in Fig. 10, a plurality of random-number position data RP are stored as in the case with the afore-mentioned memory 20. In this case, the stored content of the memory 20 is strictly coincident with that of the memory 30. The control unit 31 adds the random-number position data RP (or RP1, RP2) read from the memory 20 to the signal (DA, α) enciphered by the encipherment-breaking processor 10 and transmits the same to a random-number bit remover 32. At this time, the sequential order of the random-number position data read from the memory 20 is the same to the reading sequential order of the control unit 21 on the transmitter side. Therefore, the random-number position data RP read from the memory 30 are served as data indicative of the insert position of the random-number *α* in the received signal (DA, α). The random-number bit remover 32 removes the random-number α from the signal (DA, α) based on the content of the random-number position data RP and outputs the signal DA (original data).

As discussed above, since the random-number insert position is appropriately shifted in this embodiment, concealability of a signal is greatly enhanced.

It should be noted that although the random-number insert position is shifted based on the random-number position data RP prestored in the memory in this embodiment, it may be shifted based on time data, etc. What is essential here is that the random-number positions recognized between the transmitter side and the receiver side are synchronous.

### C: Third Embodiment

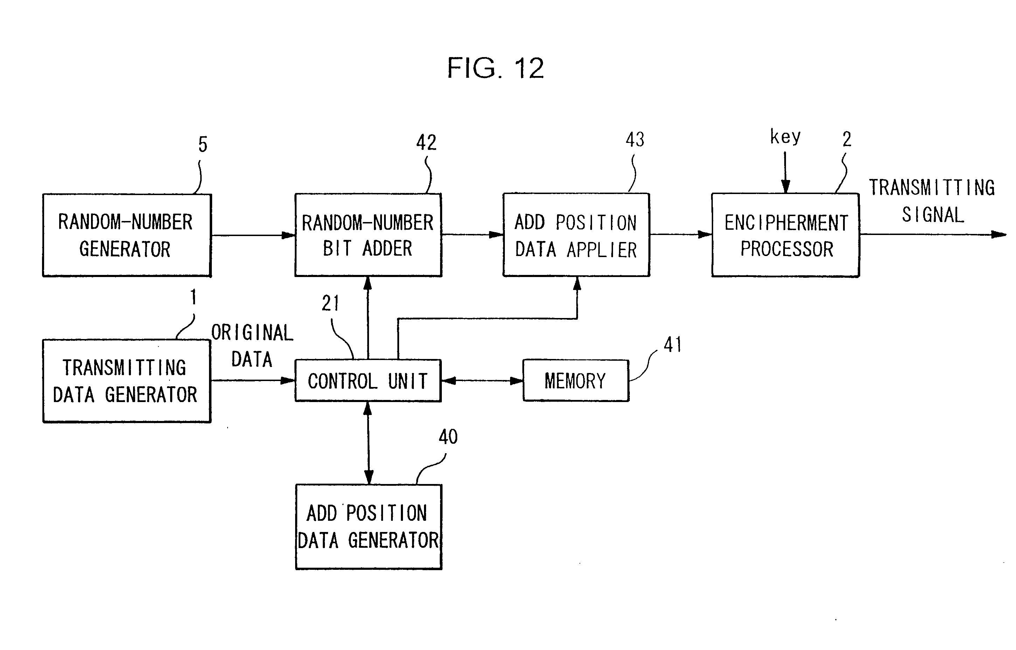

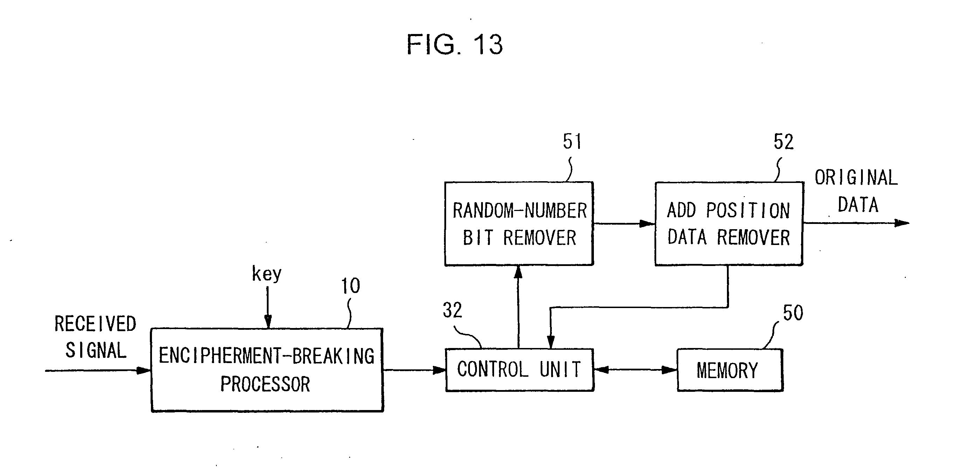

Next, the third embodiment will be described with reference to Figs. 12 and 13 . Corresponding parts of the illustrations to those of the respective embodiments mentioned above are denoted by identical reference numerals and description thereof is omitted.

An add position data generator 40 of Fig. 12 generates random-number position data RP indicating an adding position for a random-number α. The random-number position data RP of this case are a random value or a variable value in accordance with a predetermined rule. Also, an initial value of the random-number position data RP is stored in the memory 41. When supplied with the signal DA (original data) from the transmitting data generator 1, the control unit 21 transmits the same to a random-number bit adder 42 and an add position data applier 43 together with the random-number position data RP read from the memory 41 and substitutes the random-number position data RP newly prepared by the add position data generator 40 in the memory 41.

As in the case with the second embodiment, the random-number bit adder 42 inserts a random-number α in a corresponding position to the random-number position data RP in the signal DA to prepare a signal (DA, α) and outputs the same. The add position data applier 43 applies the random-number position data RP to a predetermined position of the signal (DA, α) and outputs the same as a signal (DA, α, RP) . This signal is enciphered by the encipherment processor 2 and transmitted to the receiver side of Fig. 13 as a signal (DA, α, RP).

An initial value of a random-number position data RP is stored in a memory 50 of Fig. 13. This value is the same to that in the memory 41. When supplied with a signal (DA, α, RP) from an encipherment-breaking processor 10, a control unit 32 transmits the same to a random-number bit remover 51 together with the random-number position data RP read from the memory 50. In the random-number bit remover 51, as in the case with the afore-mentioned embodiment, the random-number α is removed with reference to the random-number position data RP to prepare a signal (DA, RP) and the signal (DA, RP) is transmitted to an add position data remover 52 . In the add position data remover 52, the random-number position data RP are discriminated from the signal (DA, RP) to restore the signal DA so as to be output. At the same time, the discriminated random-number position data RP are transmitted to the control unit 32. Also, the random-number position data RP transmitted to the control unit 32 are written for renewal in the memory 50.

As described above, the random-number position data RP corresponding to the next signal are added to the preceding signal and transmitted on the transmitter side, whereas the random-number α is removed from a newly received signal using the random-number position data RP added to the preceding signal on the receiver side. Accordingly, the random-number position data RP used on the transmitter side are always coincident with the random-number position data RP used on the receiver side.

In the above description, the random-number position data RP of the next transmitting signal are added to the preceding transmitting signal. In the alternative, the random-number position data RP used for the current transmitting signal may be added directly to the current transmitting signal. It should be noted, however, that concealability of signal is higher in the case of the above-mentioned embodiment.

### D: Others

### (1) Re: Random-Number

As the random-number in the above-mentioned respective embodiments, those generated by a known random-number generator may be used. It is also acceptable that a random-number table is stored in a memory and a random-number is generated by appropriately reading this random table.

Also, a numeric value, which cannot be defined as a random-numbers in a strict sense, may be used. For example, time information output by a timer and output values of a counter for sequentially counting a given clock may be used.

### (2) Re: Encipherment

Various algorithms may be used for encipherment. The encipherment is classified roughly into two: secret key method and open key method. This classification is made based on the way of use of an encipherment key. Any of the two may be applied to the present invention.

In the case of the secret key method, it is required for both the transmitter side and the receiver side to preliminarily have the same key. This method enables a high-speed operation and is, therefore, practical . The key in this secret key method may be preliminarily fixedly stored on both the transmitter side and the receiver side or the key may be delivered at the start of a communication.

As a known encipherment algorithm for the secret key method, there is an FEAL (Fast Data Encipherment Algorithm). This algorithm is discussed in detail, for example, on pages 43 to 49 of "Encipherment and Data Security" (co-written by Shigeo Tsujii and Masao Kasahara: issued by Shokodo).

### (3) Example of Construction of Random-Number Bit Adder

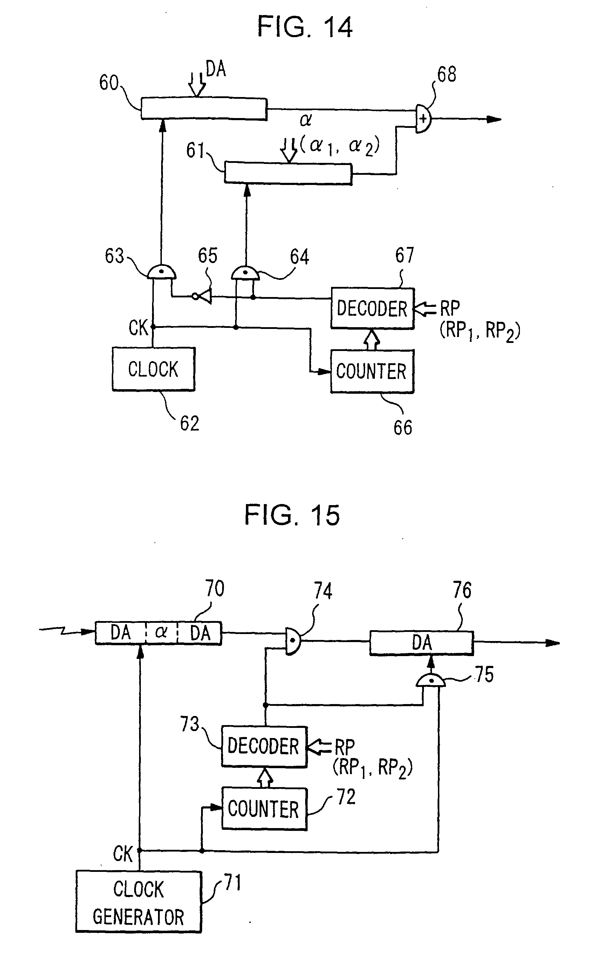

One example of a construction of the random-number bit adders 6, 22 and 42 of the above-mentioned respective embodiments is depicted in Fig. 14. In a circuit depicted in this illustration, a signal DA and a random-number α are transmitted to shift registers 60 and 61, respectively. Based on clock CK supplied from a clock generator 62 respectively through AND getes 63 and 64, the shift registers 60 and 61 shift the signal DA and the random-number α by a bit each time and output the same. A counter 66 is adapted to cyclically count the clock CK and the counting cycle corresponds to a combined length of the signal DA and random-number α (or α1, α 2). A decoder 67 is adapted to decode the value counted by the counter 66. The decoder 67 outputs a signal "1" from a count value corresponding to the random-number position data RP (or RP1, RP2) to a count value corresponding to the random-number α (or α1, α 2) and outputs a signal "0" in other count values. The output signals of the decoder 67 are supplied to the AND gate 64 and also to the AND gate 63 through an inverter 65.

According to the above-mentioned construction, the output signal of the decoder 67 is "0" in all other positions than the bit position of the random-number α designated by the random-number position data RP. As a consequence, the AND gate 63 is brought to be open, the AND gate 64 is brought to be closed, and the shift register 60 alone performs the shifting operation. Consequently, the signal DA in the shift register 60 is output through an OR gate 68. On the other hand, the output signal of the decoder 67 is "1" in the bit position of the random-number α (or α1, α2) designated by the random-number position data RP (or RP1, RP2). As a consequence, the AND gate 63 is brought to be closed, the AND gete64 is brought to be open, and the shift register 61 alone performs the shifting operation. Consequently, the random-number α (or α1, α2) is output from the OR gate 68. In this way, a signal having the random-number α applied to a predetermined position of the signal DA is prepared.

The afore-mentioned bit adder 9 adds not only the random-number α but also the identification data ID. The adding portion of the random-number α can be realized with the above-mentioned circuit construction.

It should be noted that the above-mentioned circuit example is only one example and other circuit constructions may be employed. Also, the same purpose may be realized by means of software processing.

### (4) Constitutional Example of Random-Number Bit Remover

Fig. 15 is a block diagram showing one example of a construction of the random-number bit remover 11, 22, 32, 51.

In the circuit depicted in the illustration, data of a combination of the signal DA and random-number α are transmitted to a shift register 70. A clock signal CK output from a clock generator 71 is transmitted to the shift register 70, a counter 72, and an AND gate 75. The counter 72 is adapted to cyclically count the clock CK and the count cycle corresponds to the combined length of the signal DA and the random-number α (or α1, α2). The decoder 73 is adapted to decode the count value of the counter 72. The decoder 73 outputs a signal "0" from the count value corresponding to the random-number position data RP (or RP1, RP2) to the random-number *α* (or *α*1, α2) and outputs a signal "1" in other count values. The output signals of the decoder 73 are supplied to the AND gates 74 and 75.

According to the above-mentioned construction, signals (DA, α) are output, one after another, from the shift register 70 in synchronism with the clock signal CK. Since the output signal of the decoder 73 is "1" in other position than the bit position of the random-number α designated by the random-number position data RP, the AND gate 75 is brought to be open and the shift register 76 performs the shifting operation. Since the AND gate 74 is also open at this time, the data output, one after another, from the shift register 70 are transmitted, one after another, to the shift register 76 through the AND gate 74.

On the other hand, the output signal of the decoder 73 is "0" in the bit position of the random-number α designated by the random-number position data RP. As a consequence, the AND gates 74 and 75 are brought to be closed and the shift register 70 alone performs the shifting operation. Consequently, the random-number α (or α1, α2) output from the shift register 70 does not pass through the AND gate 74 and is discarded. Since the shift register 76 does not perform the shifting operation at this time, no input side empty bit is generated. When other bit positions than the random-number α come, the AND gates 74 and 75 are brought to be open again and the shift register 76 starts the shifting operation. As a consequence, the signal DA is transmitted to the shift register 76. By means of the afore-mentioned operation, only the signal DA is extracted in the shift register 76.

It should be noted that the above-mentioned circuit example is only one example and other circuit constructions may be employed. Also, the same purpose may be realized by means of software processing.

### E: Effect

As described in the foregoing, in the above-mentioned respective embodiments, a signal is added with a random-number and then enciphered. Accordingly, encipherment of a single signal results in generation of a plurality of designs. By this, for example, even in the case where data are obliged to be open because a common access channel is used, the transmitting signal itself can favorably be concealed and interference can fully be prevented from occurrence.

### Industrial Applicability

This invention is suited to be used for a case in which a plurality of mobile stations can access to a common access channel, for example. The invention can also be used for communication in which concealment is necessary. It can also be applied to a case in which a packet communication is performed in a mobile communication.

## Claims

1. A signal transmitting method comprising the steps of:
generating random number position data (RP);
generating transmission data (DA, α) by inserting random-number bits (α) into positions of original data (DA) designated by said random-number position data (RP);
generating a transmission signal (DA, α)' by enciphering said transmission data (DA, α) using a predetermined key (key); and
transmitting said transmission signal (DA, α)'.

2. The signal transmitting method of claim 1 **characterized in that**:
said random-number position data (RP) is generated in a predetermined sequential order.

3. The signal transmitting method of claim 1 **characterized in that**:
said random-number position data is inserted into a predetermined position of said original data forming a transmission data (DA, α, RP) and a transmission signal (DA, α, RP)'.

4. The signal transmitting method of one of the claims 1 to 3 **characterized in that**:
said random number bits (α) for original data (DA) currently given are generated; and
said random-number position data (RP) is inserted into predetermined positions of the original data.

5. The signal transmitting method of one of the claims 1 to 4 **characterized in that**:
said random-number position data (RP) is generated for succeeding original data (DA) to be given after the original data (DA).

6. The signal transmitting method of one of the claims 1 to 5 **characterized in that**:
said random-number bits (α) are inserted into positions of original data (DA) designated by previous random number position data (RP) which have been inserted into previous original data (DA) given prior to the original data (DA).

7. A signal receiving method comprising the steps of:
receiving a transmission signal (DA, α)' as a received signal;
generating received data (DA, α) by deciphering said received signal (DA, α)' using a predetermined key (key); and
reproducing original data (DA) by removing random-number bits (α) from positions in said received data (DA, α), said positions being designated by a random-number position data (RP).

8. A signal receiving method of claim 7 further comprising the step of:
generating random-number position data (RP) in a predetermined sequential order.

9. The signal transmitting method of claim 7 **characterized in that**:
said random-number position data is inserted into a predetermined position of said original data forming a received data (DA, α, RP) and a transmission signal (DA, α, RP)'.

10. A signal receiving method of claim 9 further comprising the steps of:
extracting random-number position data (RP) from predetermined position data positions in said received data (DA, α, RP); and
reproducing original data (DA) from said received data (DA, α, RP) by removing random number bits (α) from positions of the received data (DA, α, RP), said positions being designated by said random-number position data (RP).

11. The signal receiving method of claim 10 **characterized in that**:
said random-number position data (RP) is extracted from previous received data (DA, α, RP) which have been obtained from received signal prior to the received signal.

12. A communication method comprising,
as transmitter steps, the steps of:
generating random-number position data (RP);
generating transmission data (DA, α) by inserting random-number bits (α) into positions of original data (DA) designated by said random-number position data (RP);
generating a transmission signal (DA, α)' by enciphering said transmission data (DA, α) using a predetermined key (key); and
transmitting said transmission signal (DA, α)', and
as receiver steps, the steps of:
receiving said transmission signal (DA, α)' as a received signal;
generating received data (DA, α) by deciphering said received signal (DA, α)' using a predetermined key (key); and
reproducing original data (DA) by removing random-number bits (α) from positions in said received data (DA, α), said positions being designated by said random-number position data (RP).

13. The communication method of claim 12 **characterized in that**:
said random-number position data (RP) in the transmitter step is generated in a predetermined sequential order.

14. The communication method of claim 12 **characterized in that**:
said random-number position data is inserted into a predetermined position of said original data forming a transmission data (DA, α, RP) and a transmission signal (DA, α, RP)'.

15. The communication method of claim 13 further comprising the receiver step of:
generating random-number position data (RP) in said predetermined sequential order.

16. The communication method of claim 14 further comprising the step of:
extracting random-number position data (RP) from predetermined position data positions in said received data (DA, α, RP).

17. The communication method of one of the claims 12 to 16 **characterized in that**:
random number bits (α) for original data (DA) currently given are generated; and
said random-number position data (RP) is inserted into predetermined positions of the original data.

18. The communication method of one of the claims 12 to 17 **characterized in that**:
said random-number position data (RP) is generated for succeeding original data (DA) to be given after the original data (DA).

19. The communication method of claim 18 **characterized in that**:
said random-number position data (RP) is extracted from previous received data (DA, α, RP) which have been obtained from received signal prior to the received signal.

20. A signal transmitting device comprising:
a random-number generator (5) for generating random-number bits (α);
random-number position data generating means (20) for generating random-number position data (RP);
a random-number bit adder (6) for generating transmission data (DA, α) by inserting said random-number bits (α) into positions of original data (DA), said positions being designated by said random-number position data (RP);
an encipherment processor (2) for generating a transmission signal (DA, α)' by enciphering said transmission data (DA, α) using a predetermined key (key); and
transmitting means for transmitting said transmission signal (DA, α)'.

21. The signal transmitting device of claim 20 **characterized in that**:
said random-number position data (RP) is generated in a predetermined sequential order.

22. The signal transmitting device of claim 20 **characterized in that**:
said random-number position data is inserted into a predetermined position of said original data forming a transmission data (DA, α, RP) and a transmission signal (DA, α, RP)'.

23. The signal transmitting device of claims 22 **characterized in that**:
said random-number bits (α) are inserted into positions of original data (DA) designated by previous random number position data (RP) which have been inserted into previous original data (DA) given prior to the original data (DA).

24. A signal receiving device comprising:
receiving means for receiving a transmission signal (DA, α)' as a received signal;
an encipherment breaking processor (10) for generating received data (DA, α) by deciphering said received signal (DA, α)' using a predetermined key (key); and
a random-number bit remover (11) for reproducing original data (DA) by removing random-number bits (α) from positions in said received data (DA, α), said positions being designated by a random-number position data (RP).

25. The signal receiving device of claim 24 further comprising:
a random-number position data generating means (30) for generating random-number position data (RP) in a predetermined sequential order.

26. The signal receiving device of claim 24 **characterized in that**:
said random-number position data is inserted into a predetermined position of said original data forming a received data (DA, α, RP) and a transmission signal (DA, α, RP)'.

27. The signal receiving device of claim 26 further comprising:
a position data remover (52) for removing random-number position data (RP) from predetermined positions of said received data (DA, α, RP).

28. The signal receiving device of claim 27 **characterized in that**:
said positions in said received data (DA, α, RP) being designated by previous random-number position data (RP) removed from previous received data (DA, α, RP) which have been obtained prior to said received data (DA, α, RP).

29. A communication system comprising,
as a transmitter device
a random-number generator (5) for generating random-number bits (α);
random-number position data generating means (20) for generating random-number position data (RP);
a random-number bit adder (6) for generating transmission data (DA, α) by inserting said random-number bits (α) into positions of original data (DA), said positions being designated by said random-number position data (RP);
an encipherment processor (2) for generating a transmission signal (DA, α)' by enciphering said transmission data (DA, α) using a predetermined key (key); and
transmitting means for transmitting said transmission signal (DA, α)', and,
as a receiver device
receiving means for receiving said transmission signal (DA, α)' as a received signal;
an encipherment breaking processor (10) for generating received data (DA, α) by deciphering said received signal (DA, α)' using a predetermined key (key); and
a random-number bit remover (11) for reproducing original data (DA) by removing random-number bits (α) from positions in said received data (DA, α), said positions being designated by said random-number position data (RP).

30. The communication system of claim 29 **characterized in that**:
said random-number position data (RP) is generated in a predetermined sequential order.

31. The communication system of claim 29 further comprising as a receiver device:
a random-number position data generating means (30) for generating random-number position data (RP) in a predetermined sequential order.

32. The communication system of claim 29 **characterized in that**:
said random-number position data is inserted into a predetermined position of said original data forming a transmission data (DA, α, RP) and a transmission signal (DA, α, RP)'.

33. The communication system of claim 32 further comprising:
a position data remover (52) for removing random-number position data (RP) from predetermined positions of said received data (DA, α, RP).

34. The communication system of claim 33 **characterized in that**:
said random-number bits are inserted in positions being designated by previous random-number position data (RP) which have been inserted to previous original data (DA) prior to said original data (DA); and
said random-number bits are removed from positions designated by previous random-number position data (RP) removed from previous received data (DA, α, RP) which have been obtained prior to said received data (DA, α).

## Patentansprüche

1. Ein Signalübertragungsverfahren mit den Schritten:
Erzeugen von Zufallszahlpositionsdaten (RP);
Erzeugen von Übertragungsdaten (DA, α) durch Einfügen von Zufallszahlbits (α) an Positionen der Originaldaten (DA), die durch die Zufallszahlpositionsdaten (RP) bezeichnet sind;
Erzeugen eines Übertragungssignals (DA, α)' durch Verschlüsseln der Übertragungsdaten (DA, α) unter Verwendung eines vorbestimmten Schlüssels (key); und
Übertragen des Übertragungssignals (DA, α)'.

2. Das Signalübertragungsverfahren nach Anspruch 1, **dadurch gekennzeichnet, dass**
die Zufallszahlpositionsdaten (RP) in einer vorbestimmten fortlaufenden Reihenfolge erzeugt werden.

3. Das Signalübertragungsverfahren nach Anspruch 1, **dadurch gekennzeichnet, dass**:
die Zufallszahlpositionsdaten an eine vorbestimmte Position der Originaldaten eingefügt werden, Übertragungsdaten (DA, α, RP) und ein Übertragungssignal (DA, α, RP)' ausbildend.

4. Das Signalübertragungsverfahren nach einem der Ansprüche 1 bis 3, **dadurch gekennzeichnet, dass**:
die Zufallszahlbits (α) für die aktuell gegebenen Originaldaten (DA) erzeugt werden; und
die Zufallszahlpositionsdaten (RP) an vorbestimmte Positionen der Originaldaten eingefügt werden.

5. Das Signalübertragungsverfahren nach einem der Ansprüche 1 bis 4, **dadurch gekennzeichnet, dass**:
die Zufallszahlpositionsdaten (RP) für nachfolgende Originaldaten (DA) erzeugt werden, die nach den Originaldaten (DA) gegeben werden.

6. Das Signalübertragungsverfahren nach einem der Ansprüche 1 bis 5, **dadurch gekennzeichnet, dass**:
die Zufallszahlbits (α) an Positionen der Originaldaten (DA) eingefügt werden, die durch vorherige Zufallszahlpositionsdaten (RP) bezeichnet werden, welche in die vorherigen Originaldaten (DA) eingefügt wurden, die vor den Originaldaten (DA) gegeben wurden.

7. Ein Signalempfangsverfahren mit den Schritten:
Empfangen eines Übertragungssignals (DA, α)' als empfangenes Signal;
Erzeugen von empfangenen Daten (DA, α) durch Entschlüsseln des empfangenen Signals (DA, α)' unter Verwendung eines vorbestimmten Schlüssels (key); und
Wiederherstellen von Originaldaten (DA) durch Entfernen der Zufallszahlbits (α) von Positionen in den empfangenen Daten (DA, α), wobei die Positionen durch Zufallszahlpositionsdaten (RP) bezeichnet werden.

8. Ein Signalempfangsverfahren nach Anspruch 7, ferner mit dem Schritt:
Erzeugen von Zufallszahlpositionsdaten (RP) in einer vorbestimmten fortlaufenden Reihenfolge.

9. Das Signalübertragungsverfahren nach Anspruch 7, **dadurch gekennzeichnet, dass**:
die Zufallszahlpositionsdaten an eine vorbestimmte Position der Originaldaten eingefügt werden, empfangene Daten (DA, α, RP) und ein Übertragungssignal (DA, α, RP)' ausbildend.

10. Ein Signalempfangsverfahren nach Anspruch 9, ferner mit dem Schritt:
Extrahieren der Zufallszahlpositionsdaten (RP) von den vorbestimmten Positionsdatenpositionen in den empfangenen Daten (DA, α, RP); und
Wiederherstellen der Originaldaten (DA) aus den empfangenen Daten (DA, α, RP) durch Entfernen der Zufallszahlbits (α) von den Positionen der empfangenen Daten (DA, α, RP), wobei die Positionen durch die Zufallszahlpositionsdaten (RP) bezeichnet werden.

11. Das Signalempfangsverfahren nach Anspruch 10, **dadurch gekennzeichnet, dass**:
die Zufallszahlpositionsdaten (RP) von vorher empfangenen Daten (DA, α, RP), die von einem empfangenen Signal vor dem empfangenen Signal erhalten wurden, extrahiert wurden.

12. Ein Kommunikationsverfahren, das als Übertragerschritte die Schritte aufweist:
Erzeugen von Zufallszahlpositionsdaten (RP);
Erzeugen von Übertragungsdaten (DA, α) durch Einfügen von Zufallszahlbits (α) an Positionen der Originaldaten (DA), die durch Zufallszahlpositionsdaten (RP) bezeichnet werden;
Erzeugen eines Übertragungssignals (DA, α)' durch Verschlüsseln der Übertragungsdaten (DA, α) unter Verwendung eines vorbestimmten Schlüssels (key); und
Übertragen des Übertragungssignals (DA, α)', und
als Empfängerschritte die Schritte:
Empfangen des Übertragungssignals (DA, α)' als ein empfangenes Signal;
Erzeugen der empfangenen Daten (DA, α) durch Entschlüsseln des empfangenen Signals (DA, α)' unter Verwendung eines vorbestimmten Schlüssels (key); und
Wiederherstellen der Originaldaten (DA) durch Entfernen der Zufallszahlbits (α) an Positionen in den empfangenen Daten (DA, α), wobei die Positionen durch die Zufallszahlpositionsdaten (RP) bezeichnet werden.

13. Das Kommunikationsverfahren nach Anspruch 12, **dadurch gekennzeichnet, dass**
die Zufallszahlpositionsdaten (RP) in dem Übertragerschritt in einer vorbestimmten fortlaufenden Reihenfolge erzeugt werden.

14. Das Kommunikationsverfahren nach Anspruch 12, **dadurch gekennzeichnet, dass**
die Zufallszahlpositionsdaten an eine vorbestimmte Position der Originaldaten eingefügt werden, Übertragungsdaten (DA, α, RP) und ein Übertragungssignal (DA, α, RP)' ausbildend.

15. Das Kommunikationsverfahren nach Anspruch 13, ferner mit dem Empfängerschritt:
Erzeugen von Zufallszahlpositionsdaten (RP) in der vorbestimmten fortlaufenden Reihenfolge.

16. Das Kommunikationsverfahren nach Anspruch 14, ferner mit dem Schritt:
Extrahieren der Zufallszahlpositionsdaten (RP) von den vorbestimmten Positionsdatenpositionen in den empfangenen Daten (DA, α, RP).

17. Das Kommunikationsverfahren nach einem der Ansprüche 12 bis 16, **dadurch gekennzeichnet, dass**:
Zufallszahlbits (α) für aktuell gegebene Originaldaten (DA) erzeugt werden; und
die Zufallszahlpositionsdaten (RP) an vorbestimmten Positionen der Originaldaten eingefügt werden.

18. Das Kommunikationsverfahren nach einem der Ansprüche 12. bis 17, **dadurch gekennzeichnet, dass**:
die Zufallszahlpositionsdaten (RP) für folgende Originaldaten (DA), die nach den Originaldaten (DA) gegeben werden, erzeugt werden.

19. Das Kommunikationsverfahren nach Anspruch 18, **dadurch gekennzeichnet, dass**:
die Zufallszahlpositionsdaten (RP) von den vorher empfangenen Daten (DA, α, RP) extrahiert werden, die von dem empfangenen Signal vor dem empfangenen Signal erhalten werden.

20. Eine Signalübertragungsvorrichtung mit:
einem Zufallszahlgenerator (5) zum Erzeugen von Zufallszahlbits (α);
einer Zufallszahlpositionsdatenerzeugungseinrichtung (20) zum Erzeugen von Zufallszahlpositionsdaten (RP);
einem Zufallszahlbitaddierer (6) zum Erzeugen von Übertragungsdaten (DA, α) durch Einfügen der Zufallszahlbits (α) an Positionen der Originaldaten (DA), wobei die Positionen durch die Zufallszahlpositionsdaten (RP) bezeichnet werden;
einem Verschlüsselungsprozessor (2) zum Erzeugen eines Übertragungssignals (DA, α)' durch Verschlüsseln der Übertragungsdaten (DA, α) unter Verwendung eines vorbestimmten Schlüssels (key); und
einer Übertragungseinrichtung zum Übertragen des Übertragungssignals (DA, α)'.

21. Die Signalübertragungsvorrichtung nach Anspruch 20, **dadurch gekennzeichnet, dass**
die Zufallszahlpositionsdaten (RP) in einer vorbestimmten fortlaufenden Reihenfolge erzeugt werden.

22. Die Signalübertragungsvorrichtung nach Anspruch 20, **dadurch gekennzeichnet, dass**
die Zufallszahlpositionsdaten an eine vorbestimmte Position der Originaldaten eingefügt werden, Übertragungsdaten (DA, α, RP) und ein Übertragungssignal (DA, α, RP)' ausbildend.

23. Die Signalübertragungsvorrichtung nach Anspruch 22, **dadurch gekennzeichnet, dass**
die Zufallszahlbits (α) an Positionen der Originaldaten (DA) eingefügt werden, die durch vorherige Zufallszahlpositionsdaten (RP) bezeichnet sind, die in die vorherigen Originaldaten (DA) eingefügt wurden, die vor den Originaldaten (DA) gegeben sind.

24. Eine Signalempfangsvorrichtung mit:
einer Empfangseinrichtung zum Empfangen eines Übertragungssignals (DA, α)' als ein empfangenes Signal;
einem Verschlüsselungsauflösungsprozessor (10) zum Erzeugen der empfangenen Daten (DA, α) durch Entschlüsseln des empfangenen Signals (DA, α)' durch Verwendung eines vorbestimmten Schlüssels (key); und
einem Zufallszahlbitentferner (11) zum Wiederherstellen der Originaldaten (DA) durch Entfernen der Zufallszahlbits (α) von Positionen in den empfangenen Daten (DA, α), wobei die Positionen durch Zufallszahlpositionsdaten (RP) bezeichnet werden.

25. Die Signalempfangsvorrichtung nach Anspruch 24, ferner mit:
einer Zufallszahlpositionsdatenerzeugungseinrichtung (30) zum Erzeugen von Zufallszahlpositionsdaten (RP) in einer vorbestimmten fortlaufenden Reihenfolge.

26. Die Signalempfangsvorrichtung nach Anspruch 24, **dadurch gekennzeichnet, dass**:
die Zufallszahlpositionsdaten an eine vorbestimmte Position der Originaldaten eingefügt werden, empfangene Daten (DA, α, RP) und ein Übertragungssignal (DA, α, RP)' ausbildend.

27. Die Signalempfangsvorrichtung nach Anspruch 26, ferner mit:
einem Positionsdatenentferner (52) zum Entfernen der Zufallszahlpositionsdaten (RP) von den vorbestimmten Positionen der empfangenen Daten (DA, α, RP).

28. Die Signalempfangsvorrichtung nach Anspruch 27, **dadurch gekennzeichnet, dass**:
die Positionen in den empfangenen Daten (DA, α, RP) durch vorherige Zufallszahlpositionsdaten (RP) bezeichnet werden, die von den vorher empfangenen Daten (DA, α, RP) entfernt wurden, die vor den empfangenen Daten (DA, α, RP) erhalten wurden.

29. Ein Kommunikationssystem, das als Übertragervorrichtung umfasst:
einen Zufallszahlgenerator (5) zum Erzeugen von Zufallszahlbits (α);
eine Zufallszahlpositionsdatenerzeugungseinrichtung (20) zum Erzeugen von Zufallszahlpositionsdaten (RP);
einen Zufallszahlbitaddierer (6) zum Erzeugen von Übertragungsdaten (DA, α) durch Einfügen der Zufallszahlbits (α) an Positionen der Originaldaten (DA), wobei die Positionen durch die Zufallszahlpositionsdaten (RP) bezeichnet werden;
einen Verschlüsselungsprozessor (2) zum Erzeugen eines Übertragungssignals (DA, α)' durch Verschlüsselung der Übertragungsdaten (DA, α) unter Verwendung eines vorbestimmten Schlüssels (key); und
eine Übertragungseinrichtung zum Übertragen des Übertragungssignals (DA, α)', und
als eine Empfängervorrichtung:
eine Empfangseinrichtung zum Empfangen des Übertragungssignals (DA, α)' als empfangenes Signal;
einen Verschlüsselungsauflösungsprozessor (10) zum Erzeugen von empfangenen Daten (DA, α) durch Entschlüsseln des empfangenen Signals (DA, α)' unter Verwendung eines vorbestimmten Schlüssels (key); und
einen Zufallszahlbitentferner (11) zum Wiederherstellen der Originaldaten (DA) durch Entfernen der Zufallszahlbits (α) von Positionen in den empfangenen Daten (DA, α), wobei die Positionen durch die Zufallszahlpositionsdaten (RP) bezeichnet werden.

30. Das Kommunikationssystem nach Anspruch 29, **dadurch gekennzeichnet, dass**:
die Zufallszahlpositionsdaten (RP) in einer vorbestimmten fortlaufenden Reihenfolge erzeugt werden.

31. Das Kommunikationssystem nach Anspruch 29, das ferner als eine Empfängervorrichtung aufweist:
eine Zufallszahlpositionsdatenerzeugungseinrichtung (30) zum Erzeugen von Zufallszahlpositionsdaten (RP) in einer vorbestimmten fortlaufenden Reihenfolge.

32. Das Kommunikationssystem nach Anspruch 29, **dadurch gekennzeichnet, dass**:
die Zufallszahlpositionsdaten an eine vorbestimmte Position der Originaldaten eingefügt werden, Übertragungsdaten (DA, α, RP) und ein Übertragungssignal (DA, α, RP)' ausbildend.

33. Das Kommunikationssystem nach Anspruch 32, ferner mit:
einem Positionsdatenentferner (52) zum Entfernen der Zufallszahlpositionsdaten (RP) von vorbestimmten Positionen der empfangenen Daten (DA, α, RP).

34. Das Kommunikationssystem nach Anspruch 33, **dadurch gekennzeichnet, dass**:
die Zufallszahlbits an Positionen eingefügt werden, die durch vorherige Zufallszahlpositionsdaten (RP) bezeichnet werden, die in die vorherigen Originaldaten (DA) vor diesen Originaldaten (DA) eingefügt wurden; und
die Zufallszahlbits von den Positionen entfernt werden, die durch die vorherigen Zufallszahlpositionsdaten (RP) bezeichnet werden, die von den vorherigen empfangenen Daten (DA, α, RP) entfernt werden, die vor den empfangenen Daten (DA, α) erhalten wurden.

## Revendications

1. Procédé d'émission de signal comprenant les étapes de :
génération de données de position de nombre aléatoire (RP) ;
génération de données d'émission (DA, α) par insertion de bits de nombre aléatoire (α) à des positions des données d'origine (DA) désignées par lesdites données de position de nombre aléatoire (RP) ;
génération d'un signal d'émission (DA, α)' par chiffrement desdites données d'émission (DA, α) au moyen d'une clé prédéterminée (clé) ; et
émission dudit signal d'émission (DA, α)'.

2. Procédé d'émission de signal selon la revendication 1, **caractérisé en ce que** :
lesdites données de position de nombre aléatoire (RP) sont engendrées dans un ordre séquentiel prédéterminé.

3. Procédé d'émission de signal selon la revendication 1, **caractérisé en ce que** :
lesdites données de position de nombre aléatoire sont insérées à une position prédéterminée desdites données d'origine pour former des données d'émission (DA, α, RP) et un signal d'émission (DA, α, RP)'.

4. Procédé d'émission de signal selon une des revendications 1 à 3, **caractérisé en ce que** :
lesdits bits de nombre aléatoire (α) pour les données d'origine (DA) présentement considérées sont engendrés ; et
lesdites données de position de nombre aléatoire (RP) sont insérées à des positions prédéterminées des données d'origine.

5. Procédé d'émission de signal selon une des revendications 1 à 4, **caractérisé en ce que** :
lesdites données de position de nombre aléatoire (RP) sont engendrées pour des données d'origine suivantes (DA) à considérer après les données d'origine (DA).

6. Procédé d'émission de signal selon une des revendications 1 à 5, **caractérisé en ce que** :
lesdits bits de nombre aléatoire (α) sont insérés à des positions des données d'origine (DA) désignées par des données de position de nombre aléatoire précédentes (RP) qui ont été insérées dans les données d'origine précédentes (DA) considérées avant les données d'origine (DA).

7. Procédé de réception de signal comprenant les étapes de :
réception d'un signal d'émission (DA, α)' comme signal reçu ;
génération de données reçues (DA, α) par déchiffrement dudit signal reçu (DA, α)' au moyen d'une clé prédéterminée (clé) ; et
reproduction des données d'origine (DA) par élimination des bits de nombre aléatoire (α) de positions dans lesdites données reçues (DA, α), lesdites positions étant désignées par des données de position de nombre aléatoire (RP).

8. Procédé de réception de signal selon la revendication 7, comprenant en outre l'étape de :
génération de données de position de nombre aléatoire (RP) dans un ordre séquentiel prédéterminé.

9. Procédé d'émission de signal selon la revendication 7, **caractérisé en ce que** :
lesdites données de position de nombre aléatoire sont insérées à une position prédéterminée desdites données d'origine pour former des données reçues (DA, α, RP) et un signal d'émission (DA, α, RP)'.

10. Procédé de réception de signal selon la revendication 9, comprenant en outre les étapes de :
extraction de données de position de nombre aléatoire (RP) à partir de positions de données de position prédéterminées dans lesdites données reçues (DA, α, RP); et
reproduction des données d'origine (DA) à partir desdites données reçues (DA, α, RP) par suppression des bits de nombre aléatoire (α) à des positions des données reçues (DA, α, RP), lesdites positions étant désignées par lesdites données de position de nombre aléatoire (RP).

11. Procédé de réception de signal selon la revendication 10, **caractérisé en ce que** :
lesdites données de position de nombre aléatoire (RP) sont extraites des données reçues précédentes (DA, α, RP) qui ont été obtenues à partir du signal reçu avant le signal reçu.

12. Procédé de communication comprenant, comme étapes d'émission, les étapes de :
génération de données de position de nombre aléatoire (RP) ;
génération de données d'émission (DA, α) par insertion de bits de nombre aléatoire (α) à des positions des données d'origine (DA) désignées par lesdites données de position de nombre aléatoire (RP) ;
génération d'un signal d'émission (DA, α)' par chiffrement desdites données d'émission (DA, α) au moyen d'une clé prédéterminée (clé) ; et
émission dudit signal d'émission (DA, α)' ; et
comme étapes de réception, les étapes de :
réception dudit signal d'émission (DA, α)' comme signal reçu ;
génération de données reçues (DA, α) par déchiffrement dudit signal reçu (DA, α)' au moyen d'une clé prédéterminée (clé) ; et
reproduction des données d'origine (DA) par suppression des bits de nombre aléatoire (α) à des positions dans lesdites données reçues (DA, α), lesdites positions étant désignées par lesdites données de position de nombre aléatoire (RP).

13. Procédé de communication selon la revendication 12, **caractérisé en ce que** :
lesdites données de position de nombre aléatoire (RP) dans l'étape d'émission sont engendrées dans un ordre séquentiel prédéterminé.

14. Procédé de communication selon la revendication 12, **caractérisé en ce que** :
lesdites données de position de nombre aléatoire sont insérées à une position prédéterminée desdites données d'origine pour former des données d'émission (DA, α, RP) et un signal d'émission (DA, α, RP)'.

15. Procédé de communication selon la revendication 13, comprenant en outre l'étape de réception de :
génération de données de position de nombre aléatoire (RP) dans ledit ordre séquentiel prédéterminé.

16. Procédé de communication selon la revendication 14, comprenant en outre l'étape de :
extraction des données de position de nombre aléatoire (RP) à partir des positions de données de position prédéterminées dans lesdites données reçues (DA, α, RP).

17. Procédé de communication selon une des revendications 12 à 16, **caractérisé en ce que** :
des bits de nombre aléatoire (α) pour les données d'origine (DA) présentement considérées sont engendrés ; et
lesdites données de position de nombre aléatoire (RP) sont insérées à des positions prédéterminées des données d'origine.

18. Procédé de communication selon une des revendications 12 à 17, **caractérisé en ce que** :
lesdites données de position de nombre aléatoire (RP) sont engendrées pour des données d'origine suivantes (DA) à considérer après les données d'origine (DA).

19. Procédé de communication selon la revendication 18, **caractérisé en ce que** :
lesdites données de position de nombre aléatoire (RP) sont extraites de données reçues précédentes (DA, α, RP) qui ont été obtenues à partir d'un signal reçu avant le signal reçu.

20. Dispositif d'émission de signal comprenant :
un générateur de nombres aléatoires (5) pour engendrer des bits de nombre aléatoire (α) ;
un moyen de génération de données de position de nombre aléatoire (20) pour engendrer des données de position de nombre aléatoire (RP) ;
un additionneur de bits de nombre aléatoire (6) pour engendrer des données d'émission (DA, α) par insertion desdits bits de nombre aléatoire (α) à des positions des données d'origine (DA), lesdites positions étant désignées par lesdites données de position de nombre aléatoire (RP) ;
un processeur de chiffrement (2) pour engendrer un signal d'émission (DA, α)' par chiffrement desdites données d'émission (DA, α) au moyen d'une clé prédéterminée (clé) ; et
un moyen d'émission pour émettre ledit signal d'émission (DA, α)'.

21. Dispositif d'émission de signal selon la revendication 20, **caractérisé en ce que** :
lesdites données de position de nombre aléatoire (RP) sont engendrées dans un ordre séquentiel prédéterminé.

22. Dispositif d'émission de signal selon la revendication 20, **caractérisé en ce que** :
lesdites données de position de nombre aléatoire sont insérées à une position prédéterminée desdites données d'origine pour former des données d'émission (DA, α, RP) et un signal d'émission (DA, α, RP)'.

23. Dispositif d'émission de signal selon la revendication 22, **caractérisé en ce que** :
lesdits bits de nombre aléatoire (α) sont insérés à des positions des données d'origine (DA) désignées par des données de position de nombre aléatoire précédentes (RP) qui ont été insérées dans les données d'origine précédentes (DA) considérées avant les données d'origine (DA).

24. Dispositif de réception de signal comprenant :
un moyen de réception pour recevoir un signal d'émission (DA, α)' comme signal reçu ;
un processeur de cassure de chiffrement (10) pour engendrer des données reçues (DA, α) par déchiffrement dudit signal reçu (DA, α)' au moyen d'une clé prédéterminée (clé) ; et
un moyen de suppression des bits de nombre aléatoire (11) pour reproduire les données d'origine (DA) par suppression des bits de nombre aléatoire (α) à des positions dans lesdites données reçues (DA, α), lesdites positions étant désignées par des données de position de nombre aléatoire (RP).

25. Dispositif de réception de signal selon la revendication 24, comprenant en outre :
un moyen de génération de données de position de nombre aléatoire (30) pour engendrer des données de position de nombre aléatoire (RP) dans un ordre séquentiel prédéterminé.

26. Dispositif de réception de signal selon la revendication 24, **caractérisé en ce que** :
lesdites données de position de nombre aléatoire sont insérées à une position prédéterminée desdites données d'origine pour former des données reçues (DA, α, RP) et un signal d'émission (DA, α, RP)'.

27. Dispositif de réception de signal selon la revendication 26, comprenant en outre :
un moyen d'élimination des données de position (52) pour éliminer les données de position de nombre aléatoire (RP) à des positions prédéterminées desdites données reçues (DA, α, RP).

28. Dispositif de réception de signal selon la revendication 27, **caractérisé en ce que** :
lesdites positions dans lesdites données reçues (DA, α, RP) sont désignées par les données de position de nombre aléatoire précédentes (RP) éliminées des données reçues précédentes (DA, α, RP) qui ont été obtenues avant lesdites données reçues (DA, α, RP).

29. Système de communication comprenant,
comme dispositif d'émission :
un générateur de nombres aléatoires (5) pour engendrer des bits de nombre aléatoire (α) ;
un moyen de génération de données de position de nombre aléatoire (20) pour engendrer des données de position de nombre aléatoire (RP) ;
un additionneur de bits de nombre aléatoire (6) pour engendrer des données d'émission (DA, α) par insertion desdits bits de nombre aléatoire (α) à des positions des données d'origine (DA), lesdites positions étant désignées par lesdites données de position de nombre aléatoire (RP) ;
un processeur de chiffrement (2) pour engendrer un signal d'émission (DA, α)' par chiffrement desdites données d'émission (DA, α) au moyen d'une clé prédéterminée (clé) ; et
un moyen d'émission pour émettre ledit signal d'émission (DA, α)' ; et
comme dispositif de réception :
un moyen de réception pour recevoir ledit signal d'émission (DA, α)' comme signal reçu ;
un processeur de cassure de chiffrement (10) pour engendrer des données reçues (DA, α) par déchiffrement dudit signal reçu (DA, α)' au moyen d'une clé prédéterminée (clé) ; et
un moyen de suppression des bits de nombre aléatoire (11) pour reproduire les données d'origine (DA) par suppression des bits de nombre aléatoire (α) à des positions dans lesdites données reçues (DA, α), lesdites positions étant désignées par lesdites données de position de nombre aléatoire (RP).

30. Système de communication selon la revendication 29, **caractérisé en ce que** :
lesdites données de position de nombre aléatoire (RP) sont engendrées dans un ordre séquentiel prédéterminé.

31. Système de communication selon la revendication 29, comprenant en outre, comme dispositif de réception :
un moyen de génération de données de position de nombre aléatoire (30) pour engendrer des données de position de nombre aléatoire (RP) dans un ordre séquentiel prédétermi né.

32. Système de communication selon la revendication 29, **caractérisé en ce que** :
lesdites données de position de nombre aléatoire sont insérées à une position prédéterminée desdites données d'origine pour former des données d'émission (DA, α, RP) et un signal d'émission (DA, α, RP)'.

33. Système de communication selon la revendication 32, comprenant en outre :
un moyen de suppression de données de position (52) pour supprimer les données de position de nombre aléatoire (RP) à des positions prédéterminées desdites données reçues (DA, α, RP).

34. Système de communication selon la revendication 33, **caractérisé en ce que** :
lesdits bits de nombre aléatoire sont insérés à des positions désignées par les données de position de nombre aléatoire précédentes (RP) qui ont été insérées aux données d'origine précédentes (DA) avant lesdites données d'origine (DA) ; et
lesdits bits de nombre aléatoire sont supprimés des positions spécifiées par les données de position de nombre aléatoire précédentes (RP) retirées des données reçues précédentes (DA, α, RP) qui ont été obtenues avant lesdites données reçues (DA, α).
